# EUROPÄISCHE PATENTSCHRIFT

(11) **EP 1 409 296 B1**
(45) Veröffentlichungstag und Bekanntmachung des Hinweises auf die Patenterteilung: **20.09.2006**
(21) Anmeldenummer: 02754216.6
(22) Anmeldetag: 15.06.2002
(51) Int. Cl.: B60R 21/01

(54) **VERFAHREN ZUR KLASSIFIZIERUNG VON EINEM HINDERNIS ANHAND VON PRECRASHSENSORSIGNALEN**
METHOD FOR CLASSIFYING AN OBSTACLE BY MEANS OF PRE-CRASH SENSOR SIGNALS
PROCEDE DE CLASSIFICATION D'UN OBSTACLE AU MOYEN DE SIGNAUX DE CAPTEURS DE PRECOLLISION

(30) Priorität: 05.07.2001 DE 10132681
(43) Veröffentlichungstag der Anmeldung: 21.04.2004
(73) Patentinhaber: ROBERT BOSCH GMBH, 70442 Stuttgart (DE)
(72) Erfinder: OSWALD, Klaus, 73240 Wendlingen (DE); ROELLEKE, Michael, 71229 Leonberg-Hoefingen (DE); MORITZ, Rainer, 70794 Filderstadt (DE); LOECKLE, Gerhard, 71634 Ludwigsburg (DE); KOEHLER, Armin, 74343 Sachsenheim (DE)
(86) Internationale Anmeldenummer: PCT/DE2002/002189
(87) Internationale Veröffentlichungsnummer: WO 2003/004317

(56) Entgegenhaltungen:
- EP-A- 0 728 624
- EP-A- 0 950 583
- DE-A- 19 946 407
- DE-A- 19 949 409
- US-B1- 6 169 945

## Beschreibung

### Stand der Technik

Die Erfindung geht aus von einem Verfahren zur Klassifizierung von einem Hindernis anhand von Precrashsensorsignalen nach der Gattung des unabhängigen Patentanspruchs.

Es ist bereits aus der Offenlegungsschrift DE-198 03 068 A bekannt, Radarsensoren in Seitentüren eines Kraftfahrzeugs anzuordnen, um mit diesen Radarsensoren als Precrashsensoren die Geschwindigkeit eines Hindernisses zu bestimmen. Damit ist es dann möglich, einen optimalen Auslösezeitpunkt für Seitenairbags zu bestimmen.

Aus EP 728 624 A2 ist es bekannt, dass Rückhaltemittel dann ausgelöst werden, wenn ein Crashwert, der von der Crashverzögerung abgeleitet ist, einen Schwellwert überschreitet. Dieser Schwellwert wird in Abhängigkeit von einem Abstand des Fahrzeugs zum Ziel und einer Annäherungsgeschwindigkeit des Ziels bestimmt. Der Abstand und die Annäherungsgeschwindigkeit werden mittels eines Radarsystems bestimmt.

Aus DE 199 46 407 A1 ist ein System zur gezielten Aktivierung von passiven Rückhalteelementen in einem Fahrzeug in Abhängigkeit von der Masse bzw. Ortsfestigkeit des Hindernisses bekannt. Dabei wird mittels eines Pre-Crash-Sensors die Masse bzw. Ortsfestigkeit eines Hindernisses bestimmt. Dazu veranlasst der Pre-Crash-Sensor das Herausfahren von mindestens einem Masse- oder Ortsfestigkeitserkennungssensors aus der Fahrzeugkarosserie und zwar in Richtung auf das detektierte Hindernis. Das Hindernis kommt dann in Kontakt mit dem Masse- bzw. Ortsfestigkeitserkennungssensors und übt auf diesen in Abhängigkeit von seinen Eigenschaften eine Beschleunigung, Druck, eine Kraft etc aus, die in einer Steuereinheit ausgewertet werden.

### Vorteile der Erfindung

Das erfindungsgemäße Verfahren zur Klassifizierung von einem Hindernis anhand von Precrashsensorsignalen mit den Merkmalen des unabhängigen Patentanspruchs hat demgegenüber den Vorteil, daß eine bessere Hindernisklassifizierung ermöglicht wird, indem die Parameter Hindernisgeschwindigkeit, Beschleunigung und Beschleunigungsänderung betrachtet werden. Damit ist dann ein optimalerer Einsatz von Rückhaltemitteln möglich, weil durch die Betrachtung dieser Parameter eine genauere Schätzung möglich ist, um was für ein Hindernis es sich vermutlich handelt.

Durch die in den abhängigen Ansprüchen aufgeführten Maßnahmen und Weiterbildungen sind vorteilhafte Verbesserungen des im unabhängigen Patentanspruch angegebenen Verfahrens zur Klassifizierung von einem Hindernis anhand von Precrashsensorsignalen möglich.

Besonders vorteilhaft ist, daß der Auslösealgorithmus für die Rückhaltemittel eine bessere Auslöseperformance durch die bessere Hindernisklassifizierung aufweist. Damit ist dann letztlich ein optimalerer Auslösezeitpunkt für die Rückhaltemittel möglich. Darüber hinaus ist es von Vorteil, daß die Hindernisklassifizierung es ermöglicht, einen automatischen Brems- bzw. Lenkungseingriff vorzunehmen, der anhand verschiedener abgespeicherter Daten entschieden wird. Dies kann dann zu einer Unfallvermeidung beitragen.

Weiterhin ist es von Vorteil, daß mit der besseren Hindernisklassifizierung auch ein aktiver Fußgängerschutz möglich ist, da ein Fußgänger als Hindernis identifizierbar ist und damit beispielsweise Rückhaltemittel, die an der Außenhaut des Fahrzeugs angebracht sind, wie ein Fußgängerairbag, optimal ausgelöst werden können.

Schließlich ist es auch von Vorteil, daß eine Vorrichtung vorliegt zur Durchführung des erfindungsgemäßen Verfahrens, die einen Prozessor zur Durchführung des erfindungsgemäßen Verfahrens aufweist und gegebenenfalls mit einer Aktuatorik für die Lenkungs- bzw. Bremseingriffe und mit Fußgängerschutzmitteln, also den Außenairbags, verbunden ist.

### Zeichnung

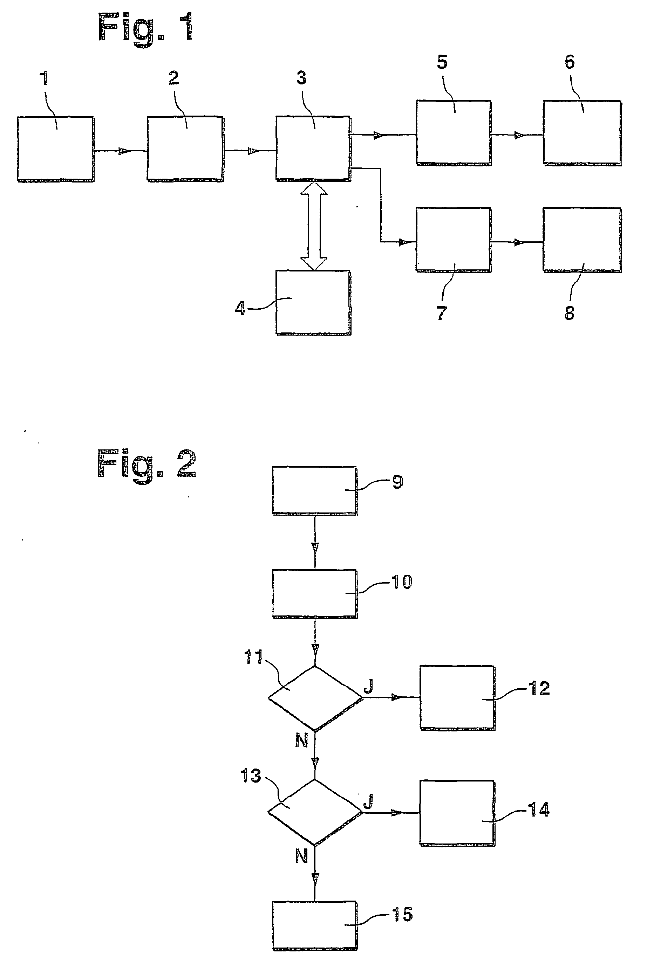

Ausführungsbeispiele der Erfindung sind in der Zeichnung dargestellt und werden in der nachfolgenden Beschreibung näher erläutert. Es zeigt Figur 1 ein Blockschaltbild einer erfindungsgemäßen Vorrichtung und Figur 2 ein Flußdiagramm des erfindungsgemäßen Verfahrens.

### Beschreibung

Die Art und die Geschwindigkeit von Hindernissen bestimmen, welche Unfallschwere ein Aufprall mit sich bringt. Erfindungsgemäß wird daher anhand von Precrashsensorsignalen eine Hindernisklassifizierung durch die Bestimmung der Hindernisgeschwindigkeit, -beschleunigung und - beschleunigungsänderung vorgenommen. Damit ist dann letztlich ein optimalerer Zeitpunkt für die Auslösung von Rückhaltemitteln und den Einsatz von Fußgängerschutzmitteln bzw. ein aktiver Eingriff in das Fahrverhalten zur Unfallvermeidung möglich.

Figur 1 zeigt als Blockschaltbild die erfindungsgemäße Vorrichtung. Ein Precrashsensor 1 ist an einen Dateneingang einer Signalverarbeitung 2 angeschlossen. Die Signalverarbeitung 2 ist über einen Datenausgang an einen Prozessor 3 angeschlossen. Über einen Datenein-/-ausgang ist der Prozessor 3 mit einem Speicher 4 verbunden. Über einen ersten Datenausgang ist der Prozessor 1 an eine Signalverarbeitung 5 angeschlossen. Über einen zweiten Datenausgang ist der Prozessor 3 an eine Signalverarbeitung 7 angeschlossen. Die Signalverarbeitung 5 ist über ihren Datenausgang mit Rückhaltemitteln 6 verbunden. Die Signalverarbeitung 7 ist über ihren Datenausgang mit einer Aktuatorik 8 verbunden. Die Aktuatorik 8 wird für aktive Eingriffe in das Fahrverhalten eingesetzt, also Lenkungseingriffe und/oder Bremseingriffe.

Als Precrashsensor wird hier ein Radarsensor verwendet, der im Millimeterbereich elektromagnetische Strahlung sendet und empfängt. Anstatt eines Radarsensors ist es auch möglich, einen Ultraschallsensor oder einen Videosensor zu verwenden. Dabei ist es auch möglich eine Mehrzahl von solchen Sensoren oder gar eine Kombination von verschiedenen Sensoren einzusetzen.

Mit den Daten aus dem Radarsensor 1, der einen digitalen Datenstrom ausgibt, der dann von der Signalverarbeitung 2 für den Prozessor 3 vorverarbeitet wird, ist es dem Prozessor 3 möglich, die Geschwindigkeit des Hindernisses zu bestimmen. Aus den Precrashsensorsignalen ist die Relativgeschwindigkeit zwischen dem Hindernis und dem Fahrzeug möglich. Mit der Kenntnis der Eigengeschwindigkeit des Fahrzeugs ist nun die Geschwindigkeit des Hindernisses in Richtung auf das Fahrzeug bestimmbar. Nachdem ein Hindernis von dem Fahrzeug erkannt worden ist, kann der Precrashsensor dessen weitere Bewegung verfolgen. Es wird also ein sogenanntes Tracking des Objekts vorgenommen. Die hieraus gewonnenen Daten können dann zur Klassifizierung des Objekts benutzt werden. Durch die Betrachtung der Fahrzeuggeschwindigkeit kann die Objektgeschwindigkeit und deren zeitliche Änderung, d.i. die Beschleunigung bestimmt werden. Durch eine zeitliche Ableitung der Geschwindigkeit des Hindernisses (=Objekts) ist die Beschleunigung des Hindernisses sowie die Beschleunigungsänderung des Hindernisses jeweils bestimmbar. Durch Integration der Geschwindigkeit des Hindernisses wird der zurückgelegte Weg bestimmt.

Der Prozessor 3 nutzt dabei für seine Berechnungen den Speicher 4, um insbesondere Zwischenergebnisse abzulegen. Ist die Geschwindigkeit des Hindernisses null, so handelt es sich vermutlich um ein stehendes Objekt, so daß durch beispielsweise einen einfachen Lenkungseingriff ein Aufprall vermieden werden kann. Bei einer geringen oder nicht vorhandenen Geschwindigkeit kann je nach der wahrscheinlichen Bremsweglänge auch ein Bremseingriff erfolgen.

Ist ein Aufprall jedoch nicht mehr zu vermeiden, dann können entsprechende Rückhaltemittel, das sind Airbags und Gurtstraffer, frühzeitig ausgelöst werden, um einen Insassenschutz zu gewährleisten. Liegt die Geschwindigkeit maximal bis 30 km/h und ist die Beschleunigung relativ gering, so kann man davon ausgehen, daß es sich bei dem Hindernis sehr wahrscheinlich um einen Fußgänger handelt. Dabei ist es möglich, die Geschwindigkeitsgrenze noch weiter zu senken, da nur wenige Fußgänger 30 km/h erreichen können.

Kann ein Aufprall mit dem Fußgänger nicht mehr vermieden werden, dann können für den Fußgänger Außenairbags optimal gezündet werden, um so den Fußgänger bei einem Aufprall optimal zu schützen und Verletzungen zu minimieren.

Generell ist zu sagen, daß wenn ein Aufprall nicht mehr vermieden werden kann, die entsprechenden Schwellen im Auslösealgorithmus für die Rückhaltemittel, der im Prozessor 3 berechnet wird, gesenkt werden, um eine Verschärfung des Auslösealgorithmusses zu erreichen, so daß also der Auslösealgorithmus bei Meßsignalen mit geringer Amplitude bereits eine Auslösung für die Rückhaltemittel 6 anzeigt.

Wurde nun festgestellt, daß es sich weder um ein festes Hindernis noch um einen Fußgänger handelt, sondern um ein Fahrzeug, dann werden wie gesagt entsprechende Lenkungseingriffe und/oder Rückhaltemittel eingesetzt.

Figur 2 zeigt das erfindungsgemäße Verfahren als Flußdiagramm. In Verfahrensschritt 9 werden die Precrashsignale von dem Precrashsensor 1 aufgenommen und als digitale Daten an die Signalverarbeitung 2 übertragen, die diese für den Prozessor 3 vorbereitet. In Verfahrensschritt 10 erfolgt durch den Prozessor 3 die Berechnung der Geschwindigkeit, Beschleunigung und Beschleunigungsänderung des Hindernisses. Anhand dieser Parameter erfolgt die Hindernisklassifizierung.

In Verfahrensschritt 11 wird nun überprüft, ob es sich um ein festes Objekt nach der Hindernisklassifizierung handelt. Ist das der Fall, dann erfolgen in Verfahrensschritt 12 die entsprechenden Schutzmaßnahmen, also entweder ein Lenkungseingriff oder ein frühzeitiges Auslösen von Rückhaltemitteln, aber immer werden die Auslöseschwellen beim Auslösealgorithmus abgesenkt, um so eine Verschärfung des Auslösealgorithmus zu erreichen.

Wurde in Verfahrensschritt 11 festgestellt, daß es sich nicht um ein festes Objekt handelt, dann wird in Verfahrensschritt 13 überprüft, ob die Hindernisklassifizierung, Verfahrensschritt 10, einen Fußgänger erkannt hat. Ist das der Fall, dann wird in Verfahrensschritt 14 eine entsprechende Schutzmaßnahme vorgenommen, entweder ein Ausweichen oder ein Zünden eines Außenairbags.

Wurde in Verfahrensschritt 13 festgestellt, daß es sich weder um einen Fußgänger handelt noch um ein festes Hindernis, sondern um ein fahrendes Objekt, also ein Fahrzeug, dann werden entsprechende Schutzmaßnahmen in Verfahrensschritt 15 vorgenommen, also die Verschärfung des Auslösealgorithmus, gegebenenfalls das frühzeitige Zünden von Rückhaltemitteln oder der Einsatz von aktiven Eingriffen in das Fahrverhalten, also Lenkungseingriffe oder Bremseingriffe. Dazu wird die Aktuatorik 8 verwendet.

## Patentansprüche

1. Verfahren zur Klassifizierung von einem Hindernis anhand von Pre-Crash-Sensor-Signalen, wobei aus den Pre-Crash-Sensor-Signalen eine Relativgeschwindigkeit zwischen Fahrzeug und dem Hindernis bestimmt wird, wobei aus der Relativgeschwindigkeit und der Eigengeschwindigkeit die Hindernisgeschwindigkeit bestimmt wird, **dadurch gekennzeichnet, dass** aus der Hindernisgeschwindigkeit eine Beschleunigung und eine Beschleunigungsänderung bestimmt wird, dass anhand der Beschleunigung, der Beschleunigungsänderung und der Hindernisgeschwindigkeit das Hindernis klassifiziert wird.

2. Verfahren nach Anspruch 1, **dadurch gekennzeichnet, dass** in Abhängigkeit von der Hindernisklassifizierung ein Auslösealgorithmus für Rückhaltemittel angepasst wird.

3. Verfahren nach Anspruch 2, **dadurch gekennzeichnet, dass** Rückhaltemittel in Abhängigkeit von der Anpassung des Auslösealgorithmusses vor einem Aufprall auf das Hindernis ausgelöst werden.

4. Verfahren nach Anspruch 1, 2 oder 3, **dadurch gekennzeichnet, dass** in Abhängigkeit von der Hindernisklassifizierung ein automatischer Bremseingriff und/oder Lenkungseingriff erfolgt.

5. Verfahren nach einem der vorhergehenden Ansprüche, **dadurch gekennzeichnet, dass** in Abhängigkeit von der Hindernisklassifizierung eine Auslösung von Fußgängerschutzmitteln erfolgt.

## Claims

1. Method for classifying an obstacle by means of pre-crash sensor signals, a relative speed between the vehicle and the obstacle being determined from the pre-crash sensor signals, the speed of the obstacle being determined from relative speed and the vehicle's own speed, **characterized in that** an acceleration and a change in acceleration are determined from the speed of the obstacle, **in that** the obstacle is classified via means of the acceleration, the change in acceleration and the speed of the obstacle.

2. Method according to Claim 1, **characterized in that** a triggering algorithm for restraint means is adapted as a function of the classification of the obstacle.

3. Method according to Claim 2, **characterized in that** restraint means are triggered as a function of the adaptation of the triggering algorithm before an impact with the obstacle.

4. Method according to Claim 1, 2 or 3, **characterized in that** an automatic braking intervention and/or steering intervention is carried out as a function of the classification of the obstacle.

5. Method according to one of the preceding claims, **characterized in that** pedestrian protection means are triggered as a function of the classification of the obstacle.

## Revendications

1. Procédé de classification d'un obstacle à l'aide de signaux de capteur de pré-collision, une vitesse relative entre le véhicule et l'obstacle étant déterminée à partir des signaux de capteur de pré-collision, et la vitesse de l'obstacle étant déterminée à partir de la vitesse relative et de la vitesse propre,
**caractérisé en ce qu'**
à partir de la vitesse de l'obstacle, on détermine une accélération et une variation d'accélération, et
à l'aide de l'accélération, de la variation d'accélération et de la vitesse de l'obstacle, on classifie l'obstacle.

2. Procédé selon la revendication 1,
**caractérisé en ce qu'**
en fonction de la classification d'obstacle, on adapte un algorithme de déclenchement de moyens de retenue.

3. Procédé selon la revendication 2,
**caractérisé en ce qu'**
en fonction de l'adaptation de l'algorithme de déclenchement, on déclenche des moyens de retenue avant un choc contre l'obstacle.

4. Procédé selon la revendication 1, 2 ou 3
**caractérisé en ce qu'**
en fonction de la classification d'obstacle, on effectue une intervention de freinage et/ou une intervention de direction automatique.

5. Procédé selon l'une des revendications précédentes,
**caractérisé en ce qu'**
en fonction de la classification d'obstacle, on effectue un déclenchement de moyens de protection pour piétons.
